# EUROPÄISCHE PATENTSCHRIFT

(11) **EP 3 888 949 B1**
(45) Veröffentlichungstag und Bekanntmachung des Hinweises auf die Patenterteilung: **02.08.2023**
(21) Anmeldenummer: 20210726.4
(22) Anmeldetag: 30.11.2020
(51) Int. Cl.: B60C 11/12, B60C 11/01, B60C 11/03

(54) **FAHRZEUGLUFTREIFEN**
PNEUMATIC TYRE
PNEUMATIQUE DE VÉHICULE

(30) Priorität: 30.03.2020 DE 102020204070
(43) Veröffentlichungstag der Anmeldung: 06.10.2021
(73) Patentinhaber: Continental Reifen Deutschland GmbH, 30165 Hannover (DE)
(72) Erfinder: Özüduru, Ahmet, 30419 Hannover (DE); Henze, Eugen, 30419 Hannover (DE); Pagac, Lubomir, 30419 Hannover (DE); Heide, Thorsten, 30419 Hannover (DE)
(74) Vertreter: Continental Corporation

(56) Entgegenhaltungen:
- EP-A1- 2 281 698
- EP-A1- 3 572 242
- DE-T5-112017 002 199
- US-A1- 2018 147 893
- US-A1- 2018 194 171
- US-A1- 2019 176 527

## Beschreibung

Die Erfindung betrifft einen Fahrzeugluftreifen in Radialbauart mit einem Laufstreifen mit zumindest einer schulterseitigen Profilrippe, in welcher in axialer Richtung Quereinschnitte verlaufen, welche eine Breite von 0,40 mm bis 0,80 mm aufweisen und zumindest bis zum seitlichen Rand der Bodenaufstandsfläche des Reifens verlaufen.

Ein derartiger Fahrzeugluftreifen ist beispielsweise aus der WO 2016/128086 A1 bekannt. Die Quereinschnitte in der schulterseitigen Profilrippe laufen über die Bodenaufstandsfläche hinaus und enden hier mit auslaufenden Einschnittabschnitten. Eine der beiden Einschnittwände der Quereinschnitte ist zur Laufstreifenperipherie angefast. Ein Laufstreifen mit derart gestalteten schulterseitigen Profilrippen soll gute Bremseigenschaften auf trockener und nasser Fahrbahn und eine gute Wasserableitung zur Außenschulterseite des Reifens aufweisen.

Die US 2018/194171 A1 offenbart ein bekanntes Reifenprofil für Fahrzeugreifen.

Der Erfindung liegt die Aufgabe zugrunde, bei einem Reifen der eingangs genannten Art im Außenschulterbereich eine verbesserte Griffperformance beim Fahren auf weichem Untergrund, beispielsweise auf Schnee, Schneematsch oder sonstigem matschigem Untergrund, insbesondere bei Kurvenfahrt sicherzustellen, also dann, wenn einer der Außenschulterbereiche mit dem weichem Untergrund in Kontakt kommt.

Gelöst wird die gestellte Aufgabe durch Anspruch 1.

Unmittelbar an die Bodenaufstandsfläche anschließend befinden sich bei erfindungsgemäßen Reifen im Außenschulterbereich Vertiefungen, die vor allem bei Kurvenfahrt auf weichem Untergrund an der Außenseite der Außenschulter zusätzlich Griffkanten zur Verfügung stellen. Durch ein Eindringen und Verdichten des weichen Materials in den Mulden der Vertiefungen wird ein grifferhöhender Effekt erzielt.

Bei einer bevorzugten Ausführung nimmt die Tiefe Vertiefung entlang ihrer Erstreckung im Außenschulterbereich kontinuierlich und bis auf 0,80 mm bis 1,00 mm ab. Der Tiefenverlauf ist daher an die Rundung des Reifens im Außenschulterbereich gut angepasst, wobei die größte Tiefe im Bereich der Mulde und beim Laufstreifenrand für einen optimalen grifferhöhender Effekt sorgt.

Für ein optimales Verdichten von weichem Untergrundmaterial in den Mulden der Vertiefungen bei Kurvenfahrt ist es vorteilhaft, wenn die Mulde der Vertiefung, in der Längserstreckung der Vertiefung betrachtet, entlang eines Kreisbogens mit einem Radius von 3,00 mm bis 6,00 mm, insbesondere 5,00 mm, verläuft. Bei einer bevorzugten Erstreckungslänge von 17,00 mm bis 30,00 mm ist auch auf besonders weichem Untergrund, beispielsweise auf frisch gefallenem Schnee, die Wirkung der Vertiefungen als grifferhöhend sichergestellt.

Bevorzugt sind die Vertiefungen in Draufsicht trapezförmig oder rechteckig.

Es ist vorgesehen, dass vom laufstreifeninnenseitigen Ende der Vertiefungen beim Laufstreifenrand jeweils ein Einschnitt abzweigt, welcher zwei zueinander unter einem stumpfen Winkel von insbesondere 110° bis 150° verlaufende Abschnitte aufweist, vor welchen der erste an die Vertiefung anschließt und unter einem spitzen Winkel von insbesondere 40° bis 70° zur Vertiefung verläuft. Diese weiteren, im Bereich der Vertiefungen an der Außenschulter verlaufenden Einschnitte stellen zusätzliche Griffkanten zur Verfügung. Diesbezüglich ist es besonders vorteilhaft, wenn jeweils der zweite Abschnitt der Einschnitte parallel zu den Vertiefungen verläuft.

Bevorzugt weisen diese Einschnitte eine insbesondere konstante Breite von 0,40 mm bis 1,00 mm und eine Tiefe von 0,80 mm bis 1,20 mm auf.

Weitere Merkmale, Vorteile und Einzelheiten der Erfindung werden nun anhand der schematischen Zeichnung, die ein Ausführungsbeispiel darstellt, näher beschrieben. Dabei zeigen
Fig. 1 eine Draufsicht (Projektion in die Ebene) eines schulterseitigen Umfangsabschnittes eines Laufstreifens eines Fahrzeugluftreifens,
Fig. 2 eine Schnittdarstellung entlang der Linie II-II der Fig. 1 und
Fig. 3 eine Schnittdarstellung entlang der Linie III-III der Fig. 1.

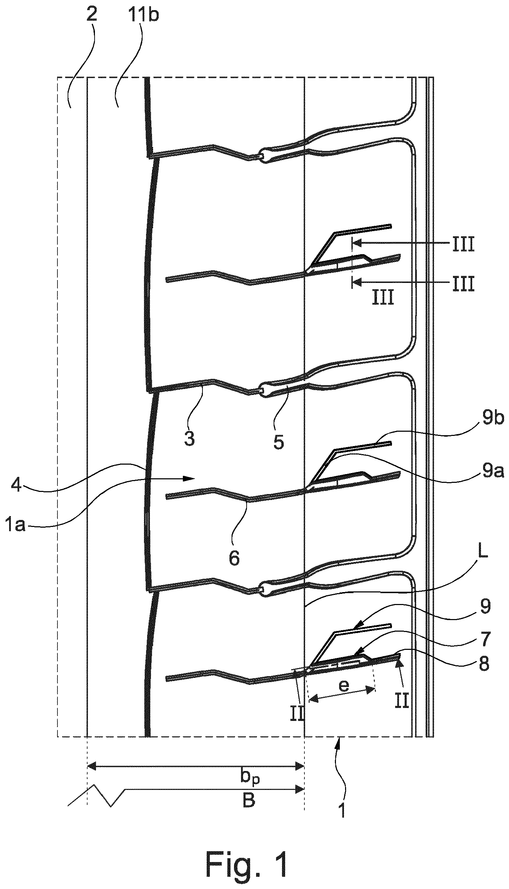

Fig. 1 zeigt einen Umfangsabschnitt einer schulterseitig verlaufenden Profilrippe 1 eines Fahrzeugluftreifens in Radialbauart, insbesondere für Personenkraftwagen, Vans oder Light - Trucks. Die Profilrippe 1 ist in Richtung zur Laufstreifenmitte durch eine in Umfangsrichtung umlaufende, in Fig. 1 angedeutete und zumindest abschnittsweise in der vorgesehenen Profiltiefe ausgeführten Umfangsrille 2 von weiteren Profilstrukturen des Laufstreifens, beispielsweise Blockreihen oder weiteren Profilrippen, getrennt. Bei der zweiten, nicht gezeigten Reifenschulter ist vorzugsweise eine zur Profilrippe 1 analoge bzw. gleich gestaltete Profilrippe vorgesehen.

In Fig. 1 kennzeichnet die Linie L den einen seitlichen Rand der Bodenaufstandsfläche bzw. des bodenberührenden Teils des Laufstreifens. Die Bodenaufstandsfläche weist eine Breite B (in Fig. 1 angedeutet) auf und entspricht dem statisch ermittelten Footprint gemäß E.T.R.T.O. -Standards, Last bei 70 % der maximalen Tragfähigkeit bei einem Innendruck von 85 %, wobei der Reifen auf einer Normfelge montiert ist. Die schulterseitige Profilrippe 1 befindet sich daher zum Teil innerhalb der Bodenaufstandsfläche und zum Teil in der Schulterrundung des Reifens, außerhalb der Bodenaufstandsfläche. Der bodenberührende Teil der Profilrippe 1 weist eine Breite bₚ von 20 % bis 30 % der Breite B auf.

Innerhalb des bodenberührenden Teils weist die Profilrippe 1 durch Quereinschnitte 3, Querrillen 5 und bogenförmig verlaufenden Einschnitten 4 gebildete blockartige Rippenelemente 1a auf, die in Umfangsrichtung aneinander anschließen. Die Quereinschnitte 3 enden laufstreifeninnenseitig innerhalb der Profilrippe 1 und münden in die Querrillen 3, welche außerhalb der Bodenaufstandsfläche mit einem verbreiterten, seichten Abschnitt auslaufen. Die bogenförmigen Einschnitte 4 verbinden die laufstreifeninnenseitigen Enden bzw. Endabschnitte der in Umfangsrichtung aufeinanderfolgenden Quereinschnitte 3, die Wölbung der Bogenform weist zur Umfangsrille 2. Zwischen den bogenförmigen Einschnitten 4 und der Umfangsrille 2 befindet sich ein unstrukturierter Profilrippenstreifen 1b vor.

Etwa mittig zwischen den in Umfangsrichtung benachbarten Quereinschnitten 3, daher etwa mittig in jedem Rippenelement 1a, verläuft jeweils ein weiterer Quereinschnitt 6, welcher außerhalb der Bodenaufstandsfläche und beim seitlichen Laufstreifenrand L in eine langestreckte Vertiefung 7 einmündet, welche eine Erstreckungslänge e von 17,0 mm bis 30, 0 mm aufweist. Die Quereinschnitte 3 und 6 sowie die bogenförmigen Einschnitte 4 weisen eine Breite von 0,4 mm bis 1,0 mm auf. Die Tiefe der Quereinschnitte 3 und 6 kann zumindest abschnittsweise bis zu 85 % der Profiltiefe betragen, die Tiefe der bogenförmigen Einschnitte 4 beträgt 1,00 mm bis 3,50 mm. Die Quereinschnitte 6 enden bei der gezeigten Ausführung laufstreifeninnenseitig innerhalb der Rippensegmente 1a, können jedoch auch bis zu den bogenförmigen Einschnitten 4 und bei Ausführungen der Profilrippe 1 ohne Einschnitte 4 bis zur Umfangsrille 2 verlaufen.

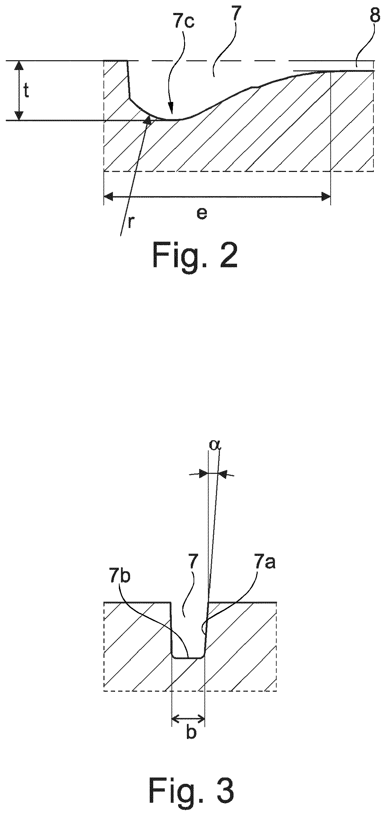

Die Vertiefung 7 verläuft in Fortsetzung des Verlaufes des Quereinschnittes 6 über die Reifenschulter in Richtung einer nicht gezeigter Reifenseitenwand und im Wesentlichen gerade. Wie die Querschnittsdarstellung in Fig. 3 zeigt, ist die Vertiefung 7 von zur radialen Richtung unter einem Winkel α von 2° bis 7° verlaufenden seitlichen Vertiefungswänden 7a und einem Vertiefungsboden 7b begrenzt. Fig. 2 zeigt den Verlauf des Vertiefungsboden 7b entlang der Längserstreckung der Vertiefung 7. Die Vertiefung 7 ist beim gezeigten Ausführungsbeispiel in Draufsicht langgestreckt trapezförmig, wobei an der Basis der Trapezform eine der Einschnittwände des Quereinschnittes 6 als eine der die Vertiefung 7 begrenzenden Vertiefungswände 7a fortgesetzt ist. In Draufsicht betrachtet weist die Vertiefung 7 über bis 80 % bis 100 % ihrer Erstreckungslänge e eine insbesondere konstante Breite b (Fig. 3) von 1,50 mm bis 2,50 mm auf.

Am reifenschulterseitigen Ende der Vertiefung 7 schließt ein kurzer, etwa 3,00 mm bis 5,00 mm langer Einschnitt 8, mit dem Quereinschnitt 6 fluchtend, an. Der Einschnitt 8 weist ebenso wie die Einschnitte 6 eine Breite von 0,4 mm bis 1,0 mm auf. Die Tiefe des Einschnittes 8 beträgt 0,80 mm bis 1,20 mm. An ihrem dem Quereinschnitt 6 zugewandten Endbereich ist die Vertiefung 7 in ihrer Längserstreckung muldenförmig vertieft, sodass die Vertiefung 7 eine Mulde 7c mit ihrer größten Tiefe t von 50 % bis 80 % der Profiltiefe aufweist. Die Mulde 7c im Vertiefungsboden 7b verläuft vorzugsweise entlang eines Kreisbogens mit einem Radius r von 3,00 mm bis 6,00 mm, insbesondere 5,00 mm. In Richtung zum Einschnitt 8 wird die Vertiefung 7 kontinuierlich seichter, der Vertiefungsboden 7b steigt daher kontinuierlich an und geht schließlich in den seichten Einschnitt 8 über.

Vom laufstreifeninnenseitigen Ende der Vertiefung 7 beim Laufstreifenrand L zweigt ein weiterer Einschnitt 9 ab, welcher zwei zueinander unter einem stumpfen Winkel von insbesondere 110° bis 150° verlaufende Abschnitte 9a, 9b aufweist, von welchen der erste Abschnitt 9a an die Vertiefung 7 anschließt und unter einem spitzen Winkel von 40° bis 70° zur Vertiefung 7 verläuft. Der zweite Abschnitt 9b verläuft insbesondere parallel zur Vertiefung 7. Die Einschnitte 9 weisen jeweils eine insbesondere konstante Breite von 0,4 mm bis 1,0 mm und eine Tiefe von 0,8 mm bis 1,2 mm auf.

Die muldenförmig vertieften Vertiefungen 7 bilden auf besonders effektive Weise Taschen zur Aufnahme und Verdichtung von Schnee und Matsch auf entsprechendem Untergrrund und speziell bei Kurvenfahrt. Im normalen Fahrbetrieb und beim Fahren auf festem Untergrund kommen diese Taschen sowie die Außenkanten der Vertiefungen 7 mit dem Untergrund nicht in Kontakt.

### Bezugsziffern liste

- 1: Profilrippe
- 1a: Profilrippensegment
- 1b: Profilrippenstreifen
- 2: Umfangsrille
- 3: Quereinschnitt
- 4: bogenförmigerEinschnitt
- 6: Quereinschnitt
- 7: Vertiefung
- 7a: Vertiefungswand
- 7b: Vertiefungsboden
- 7c: Mulde
- 8: Einschnitt
- 9: Einschnitt
- 9a, 9b: Abschnitt
- bₚ: Breite der Profilrippe 1
- b: Breite der Vertiefung 7
- B: Laufstreifenbreite
- L: Linie
- t: Tiefe
- T: Profiltiefe
- e: Erstreckungslänge
- r: Radius

## Patentansprüche

1. Fahrzeugluftreifen in Radialbauart mit einem Laufstreifen mit zumindest einer schulterseitigen Profilrippe (1), in welcher in axialer Richtung Quereinschnitte (6) verlaufen, welche eine Breite von 0,40 mm bis 1,00 mm aufweisen und zumindest bis zum seitlichen Rand der Bodenaufstandsfläche des Reifens verlaufen,
wobei an die Quereinschnitte (6) außerhalb der Bodenaufstandsfläche, im Außenschulterbereich, jeweils eine langgestreckte Vertiefung (7) anschließt, welche über 80 % bis 100 % ihrer Erstreckungslänge (e) eine Breite von 1,50 mm bis 3,00 mm aufweist und unmittelbar an den Quereinschnitt (6) anschließend sowie in Richtung ihrer Längserstreckung muldenförmig vertieft ist und im Bereich der Mulde (7c) ihre größte Tiefe (t) aufweist,
**dadurch gekennzeichnet, dass**
die größte Tiefe der Quereinschnitte (6) 60 % bis 80 % der Profiltiefe beträgt
und vom laufstreifeninnenseitigen Ende der Vertiefung (7) beim Laufstreifenrand (L) ein Einschnitt (9) abzweigt, welcher zwei zueinander unter einem stumpfen Winkel von insbesondere 110° bis 150° verlaufende Abschnitte (9a, 9b) aufweist, von welchen der erste an die Vertiefung (7) anschließt und unter einem spitzen Winkel von insbesondere 40° bis 70° zur Vertiefung (7) verläuft.

2. Fahrzeugluftreifen nach Anspruch 1, **dadurch gekennzeichnet, dass** die Tiefe (t) der Vertiefung (7) entlang ihre Erstreckung im Außenschulterbereich kontinuierlich und bis auf eine Tiefe von 0,80 mm bis 1,00 mm abnimmt.

3. Fahrzeugluftreifen nach Anspruch 1 oder 2, **dadurch gekennzeichnet, dass** die Mulde (7c) der Vertiefung (7), in der Längserstreckung der Vertiefung betrachtet, entlang eines Kreisbogens mit einem Radius (r) von 3,00 mm bis 6,00 mm, insbesondere 5,00 mm, verläuft.

4. Fahrzeugluftreifen nach einem der Ansprüche 1 bis 3, **dadurch gekennzeichnet, dass** die Vertiefung (7) eine Erstreckungslänge (e) von 17,00 mm bis 30,00 mm aufweist.

5. Fahrzeugluftreifen nach einem der Ansprüche 1 bis 4, **dadurch gekennzeichnet, dass** die Vertiefung (7) in Draufsicht trapezförmig oder rechteckig ist.

6. Fahrzeugluftreifen nach einem der Ansprüche 1 bis 5, **dadurch gekennzeichnet, dass** der zweite Abschnitt (9b) des Einschnittes (9) parallel zur Vertiefung (7) verläuft.

7. Fahrzeugluftreifen nach einem der Ansprüche 1 bis 6, **dadurch gekennzeichnet, dass** der Einschnitt (9) eine insbesondere konstante Breite von 0,4 mm bis 1,0 mm und eine Tiefe von 0,8 mm bis 1,2 mm aufweist.

## Claims

1. Pneumatic vehicle tyre of radial type of construction, having a tread with at least one shoulder-side profile rib (1) in which transverse sipes (6) extend in an axial direction, said transverse sipes having a width of 0.40 mm to 1.00 mm and extending at least to the lateral edge of the ground contact area of the tyre, wherein the transverse sipes (6) are adjoined outside the ground contact area, in the outer shoulder region, in each by an elongate depression (7) which has a width of 1.50 mm to 3.00 mm over 80% to 100% of its extent length (e) and which, directly adjoining the transverse sipe (6) and in the direction of its longitudinal extent, is depressed in a hollow-like manner and which has its greatest depth (t) in the region of the hollow (7c),
**characterized in that**
the greatest depth of the transverse sipes (6) is 60% to 80% of the profile depth, and a sipe (9) branches off from the tread-inner-side end of the depression (7) at the tread edge (L), said sipe having two portions (9a, 9b) which extend at an obtuse angle of in particular 110° to 150° to one another and of which the first portion adjoins the depression (7) and extends at an acute angle of in particular 40° to 70° to the depression (7).

2. Pneumatic vehicle tyre according to Claim 1, **characterized in that** the depth (t) of the depression (7) decreases along its extent in the outer shoulder region continuously and to a depth of 0.80 mm to 1.00 mm.

3. Pneumatic vehicle tyre according to Claim 1 or 2, **characterized in that** the hollow (7c) of the depression (7), as viewed in the longitudinal extent of the depression, extends along a circular arc with a radius (r) of 3.00 mm to 6.00 mm, in particular 5.00 mm.

4. Pneumatic vehicle tyre according to one of Claims 1 to 3, **characterized in that** the depression (7) has an extent length (e) of 17.00 mm to 30.00 mm.

5. Pneumatic vehicle tyre according to one of Claims 1 to 4, **characterized in that** the depression (7) is trapeziform or rectangular in plan view.

6. Pneumatic vehicle tyre according to one of Claims 1 to 5, **characterized in that** the second portion (9b) of the sipe (9) extends parallel to the depression (7).

7. Pneumatic vehicle tyre according to one of Claims 1 to 6, **characterized in that** the sipe (9) has an in particular constant width of 0.4 mm to 1.0 mm and a depth of 0.8 mm to 1.2 mm.

## Revendications

1. Pneumatique de véhicule de construction radiale avec une bande de roulement avec au moins une nervure de profil (1) du côté de l'épaulement, dans laquelle s'étendent dans la direction axiale des entailles transversales (6) qui présentent une largeur de 0,40 mm à 1,00 mm et s'étendent au moins jusqu'au bord latéral de la surface de contact avec le sol du pneumatique,
un creux allongé (7) se raccordant respectivement aux entailles transversales (6) à l'extérieur de la surface de contact avec le sol, dans la zone d'épaulement extérieure, lequel présente une largeur de 1,50 mm à 3 mm sur 80 % à 100 % de sa longueur d'étendue (e), et est creusé en forme d'auge directement en raccordement avec l'entaille transversale (6) ainsi que dans la direction de son étendue longitudinale et présente sa profondeur maximale (t) dans la zone de l'auge (7c),
**caractérisé en ce que**
la profondeur maximale des entailles transversales (6) représente 60 % à 80 % de la profondeur du profil,
et, à partir de l'extrémité du côté intérieur de la bande de roulement du creux (7), au niveau du bord de la bande de roulement (L), part une entaille (9) qui présente deux sections (9a, 9b) s'étendant l'une par rapport à l'autre selon un angle obtus de notamment 110° à 150°, dont la première se raccorde au creux (7) et s'étend selon un angle aigu de notamment 40° à 70° par rapport au creux (7).

2. Pneumatique de véhicule selon la revendication 1, **caractérisé en ce que** la profondeur (t) du creux (7) diminue continuellement le long de son étendue dans la zone d'épaulement extérieure et jusqu'à une profondeur de 0,80 mm à 1,00 mm.

3. Pneumatique de véhicule selon la revendication 1 ou 2, **caractérisé en ce que** l'auge (7c) du creux (7), considérée dans l'étendue longitudinale du creux, s'étend le long d'un arc de cercle ayant un rayon (r) de 3,00 mm à 6,00 mm, notamment 5,00 mm.

4. Pneumatique de véhicule selon l'une quelconque des revendications 1 à 3, **caractérisé en ce que** le creux (7) présente une longueur d'étendue (e) de 17,00 mm à 30,00 mm.

5. Pneumatique de véhicule selon l'une quelconque des revendications 1 à 4, **caractérisé en ce que** le creux (7) est trapézoïdal ou rectangulaire en vue de dessus.

6. Pneumatique de véhicule selon l'une quelconque des revendications 1 à 5, **caractérisé en ce que** la deuxième section (9b) de l'entaille (9) s'étend parallèlement au creux (7).

7. Pneumatique de véhicule selon l'une quelconque des revendications 1 à 6, **caractérisé en ce que** l'entaille (9) présente une largeur notamment constante de 0,4 mm à 1,0 mm et une profondeur de 0,8 mm à 1,2 mm.
